## Europäisches Patentamt
## European Patent Office
## Office européen des brevets

(19)

(11) Veröffentlichungsnummer: **0 017 125**

**A1**

(12) # EUROPÄISCHE PATENTANMELDUNG

(21) Anmeldenummer: 80101543.9

(22) Anmeldetag: 24.03.80

(51) Int. Cl.³: **B 60 R 1/06**

(30) Priorität: 05.04.79 IT 5313379

(43) Veröffentlichungstag der Anmeldung:
15.10.80 Patentblatt 80/21

(84) Benannte Vertragsstaaten:
AT BE CH DE FR GB LU NL SE

(71) Anmelder: ARCA Retrovisori S.r.l.
Corso Orbassano 402/21
I-10137 Torino(IT)

(72) Erfinder: Trambusti, Faustino
Corso Orbassano 402/21
I-10137 Torino(IT)

(74) Vertreter: Aprá, Andrea, Dipl.-Ing. Dr. jur. et al,
Via Cernaia 27
I-10121 Torino(IT)

(54) **Aussenrückblickspiegel für zum Schleppen von Wohnwagen, Booten u. dgl. einsetzbare Fahrzeuge.**

(57) Der Aussenrückblickspiegel (11) ist mit Hilfe einer mit elastischen Mitteln versehenen Halterung an das Kraftfahrzeug anbringbar. Diese elastischen Mittel sind als flaches, im wesentlichen Y-förmig gestaltetes Teil (22) aus elastisch dehnbarem Werkstoff, wie z.B. Gummi, ausgebildet.

EP 0 017 125 A1

./...

FIG. 1

- 1 -

<u>Aussenrückblickspiegel für zum Schleppen von Wohnwagen, Booten u.dgl. einsetzbare Fahrzeuge</u>

Die Erfindung bezieht sich auf einen Aussenrückblickspiegel für Kraftfahrzeuge, die zum Schleppen von Wohnwagen, Booten u.dgl. einsetzbar sind.

Bei bekannten Rückblickspiegeln dieser Art besteht ein Nachteil darin, dass die zu ihrer Befestigung am Kraftfahrzeug vorgesehenen elastischen Mittel mit der Zeit infolge von Oxydierungserscheinungen, hervorgerufen durch die auf sie einwirkenden Witterungseinflüsse den Elastizitätsbeiwert wenigstens zum Teil verlieren.

Ein weiterer Nachteil der bekannten Rückblickspiegel dieser Art besteht darin, dass die genannten elastischen Mittel verhältnismässig aufwendig und kompliziert sind.

Der vorliegenden Erfindung liegt die Aufgabe zugrunde, einen Aussenrückblickspiegel für Kraftfahrzeuge, die zum Schleppen von Wohnwagen, Booten u.dgl. einsetzbar sind, zu schaffen, bei dem die genannten Nachteile beseitigt sind.

Diese Aufgabe wird erfindungsgemäss dadurch gelöst, dass bei einem Rückblickspiegel dieser Art die elastischen Mittel zu seiner Befestigung am Fahrzeug als flaches, im wesentlichen Y-förmig gestaltetes Teil aus elastisch dehnbarem Werkstoff, wie z.B. Gummi, ausgebildet sind (Anspruch 1).

Weitere Merkmale der Erfindung ergeben sich aus den Ansprü - chen 2 und 3.

Derartige elastisch dehnbare Mittel unterliegen keiner Oxy - dierung, sind verhältnismässig einfach in der Herstellung, wirksam und zuverlässig in der Funktion; durch ihre Y-förmi - ge Ausbildung sind sie auch in der Lage, durch die Beanspru - chung des Fahrzeugs verursachte Schwingungen des Rückblick - spiegels zu dämpfen bzw. abzufangen.

Ein Ausführungsbeispiel der Erfindung wird nachstehend an - hand der Zeichnung näher erläutert. Darin zeigen:

Fig. 1 eine Seitenansicht des erfindungsgemässen Aussenrück - blickspiegels:

Fig. 2 den Aussenrückblickspiegel in an einem Fahrzeug befe - stigtem Zustand, wobei der Rückblickspiegel als sol - cher rückseitig und dessen elastische Mittel vorder - seitig betrachtet sind;

Fig. 3 denselben Aussenrückblickspiegel in am Fahrzeug befe - stigtem Zustand, vorderseitig betrachtet.

In der Zeichnung ist mit 10 der erfindungsgemässe Aussenrück blickspiegel in seiner Gesamtheit bezeichnet, d.h. zusammen mit seiner Halterung und den elastischen Mitteln gemäss der Erfindung zur Befestigung des Rückblickspiegels an einem Fahrzeug. Der Spiegel als solcher ist mit 11 bezeichnet.

Der Spiegel 11 ist in an sich bekannter Weise mittels eines Kugelgelenkes mit einer Buchse 12 verbunden und diese ist ihrerseits an einem rohrförmigen Arm 13 befestigt. Der Arm 13 ist am anderen Ende abgewinkelt und unter leichtem Ein - pressdruck in eine Büchse 14 einsteckbar. An dieser Büchse ist ein erster rohrförmiger Stab 15 befestigt und ein zwei - ter rohrförmiger Stab 16 ist in 17 daran angelenkt. Der rohr förmige Stab 15 ist an seinem der Buchse 14 entgegengesetzte Ende mit einem um eine Achse X axial drehbaren Blöckchen 18 fest verbunden. Der zweite rohrförmige Stab 16 ist an seinem der Buchse 14 entgegengesetzten Ende mit einem büchsenarti - gen Blöckchen 19 fest verbunden. Ausserdem trägt das büchsen artige Blöckchen 19 ein kurzes, am selben fest angeordnetes, im wesentlichen U-förmig ausgebildetes und mit einem geneig ten Schenkel versehenes Profilstück 20. Dieses kurze Profilstück 20 und das büchsenartige Blockchen 19 sind gegenseitig um die Achse X' des Blöckchens drehbar gelagert.

Mit 21 ist ein Bügel bezeichnet, dessen Längsseite 21a krallenförmig abgebogen ist. Dieser Bügel 21a ist am Blöckchen 18 derart angelenkt, dass dieses Blöckchen 18 gegenüber dem Bügel 21 um die eigene Achse X verdreht werden kann. Mit 22 sind als Ganzes die erfindungsgemässen elastischen Befesti - gungsmittel bezeichnet. Diese elastischen Mittel sind im wesentlichen als etwa Y-förmig gestaltetes flaches Teil aus einem elastisch dehnbaren Werkstoff, z.B. Gummi, ausgebildet. Die zwei oberen Arme 22a des Y-förmigen Teiles greifen mit ihren freien Enden in entsprechend ausgebildete Schlitze des Bügels 21 ein, während der untere Arm 22b des Y-förmigen Tei les mit seinem freien Ende in einen entsprechend ausgebildeten Schlitz im geneigten Schenkel des kurzen Profilstücks 20 eingreift. Hierbei sind die freien Enden der beiden oberen Arme 22a und das freie Ende des unteren Armes 22b des Y-förmigen Teiles ösenförmig umgebogen. In diesen so gebildeten Ösen ist jeweils ein robuster Stift 23 als Anschlag gegenüber dem Bügel 21 bzw. dem kurzen Profilstück 20 gelagert. Der untere Arm 22b des Y-förmigen Teiles 22 besitzt in einem angemessenen Abstand von seinem ösenförmigen Ende eine Bohrung 22b', die sich durch die ganze Breite des Armes hindurch erstreckt. In diese Bohrung 22b' wird ein Stift 23 gesteckt, nachdem der Arm 22b weiter durch den Schlitz des geneigten Schenkels des Profilstücks 20 hindurchgeführt wurde: dies für den Fall, dass zum Anbringen des Aussenrückblickspiegels der Abstand zwischen dem Bügel 21 und dem Profilstück 20 verkürzt werden soll.

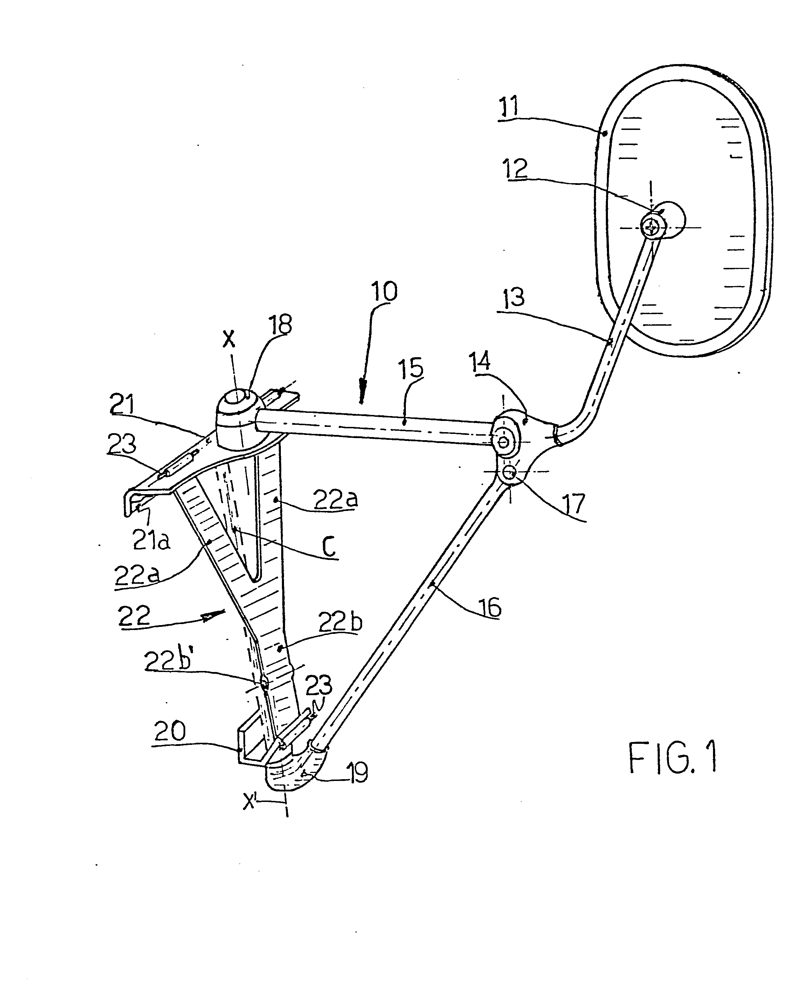

Die rohrförmigen Stäbe 15 und 16 bilden zusammen mit dem Y-förmig gestalteten flachen Teil, das die elastischen Befesti gungsmittel gemäss der Erfindung darstellt, ein gleichschenk liges Dreieck (Fig. 1). Das in Fig. 1 angedeutete Rohrstück C ist nicht ein Teil des Aussenrückblickspiegels, sondern dient lediglich dazu, den nicht am Fahrzeug befestigten Rück blickspiegel in aufrecht gestreckter Stellung ha halten.

Zum Anbringen des Aussenrückblickspiegels an das Fahrzeug wird wie folgt vorgegangen:

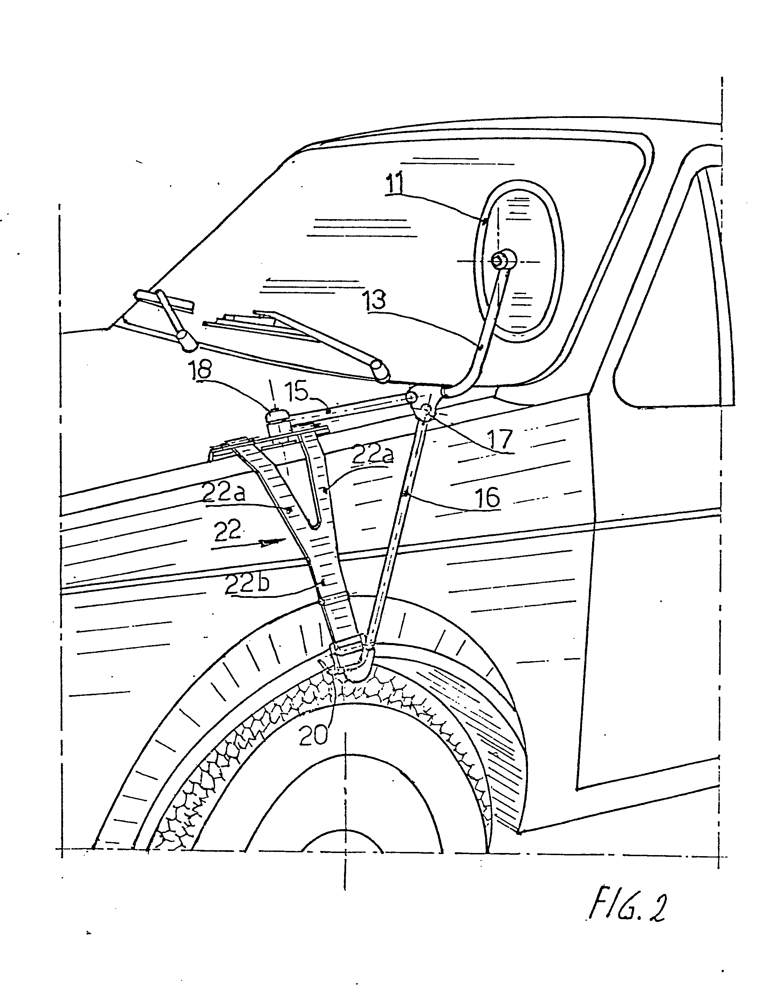

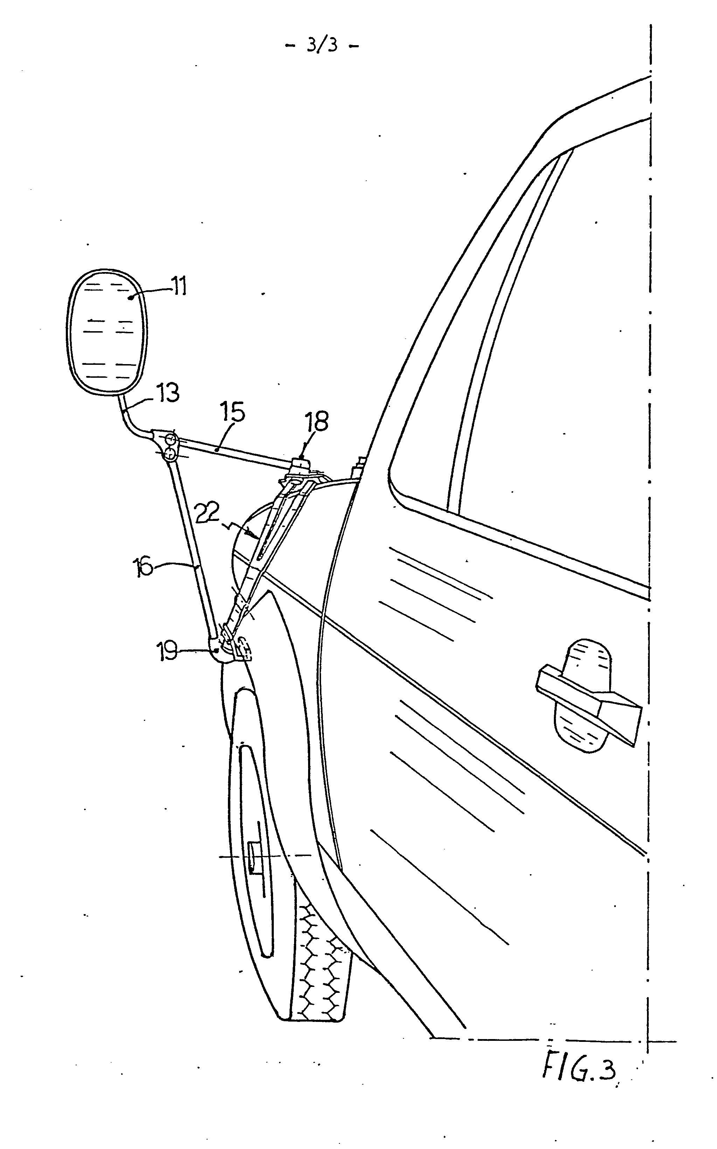

Das kurze Profilstück 20 wird mit dem Rand des vorderen Kot flügels auf der Fahrerseite in Eingriff gebracht, dann wird an dem flachen, die elastischen Mittel bildenden Teil 22 ein hinreichender Zug von Hand ausgeübt, um die krallenartig um gebogene Seite 21a des Bügels in die zwischen der Seitenwand des Fahrzeugs und dem Rand der Motorraumhaube bei einem Fahr zeug mit Frontmotor bzw. des Kofferraumdeckels bei einem Fahrzeug mit Heckmotor vorhandene Nut eingreifen zu lassen. Damit ist der erfindungsgemässe Aussenrückblickspiegel ord nungsgemäss angebracht, wie die Figuren 2 und 3 zeigen.

- 1 -

Patentansprüche

1. Aussenrückblickspiegel für zum Schleppen von Wohnwagen, Booten u.dgl. einsetzbare Kraftfahrzeuge, bei dem zum An - bringen an das Fahrzeug eine Halterung mit elastischen Mit teln vorgesehen ist, dadurch gekennzeichnet, dass die elastischen Mittel als flaches, im wesentlichen Y-förmig ge - staltetes Teil (22) aus elastisch dehnbarem Werkstoff, wie z.B. Gummi, ausgebildet sind.

2. Aussenrückblickspiegel nach Anspruch 1, dadurch gekenn- zeichnet, dass die beiden oberen Arme (22a) des flachen Y- förmig gestalteten Teiles (22) aus elastisch dehnbarem Werkstoff mit ihren freien Enden jeweils in einen entspre- chend ausgebildeten Schlitz des Bügels (21) eingreifen, während der untere Arm (22b) mit seinem freien Ende in einen entsprechend ausgebildeten Schlitz im geneigten Schenkel des kurzen Profilstücks (20) eingreift, wobei die frei en Enden dieser Arme (22a, 22b) ösenartig umgebogen sind und in den Ösen der freien Enden der beiden oberen Arme (22a) Stifte (23) als Anschläge gegen den Bügel (21) sowie in der Öse des freien Endes des unteren Armes (22b) ein Stift (23) als Anschlag gegen das kurze Profilstück (20) gelagert sind.

3. Aussenrückblickspiegel nach Anspruch 1 und 2, dadurch ge- kennzeichnet, dass der untere Arm (22b) des flachen, Y-förmig gestalteten Teiles (22) aus elastisch dehnbarem Werkstoff in angemessenem Abstand von seinem freien ösenartig ausgebildeten Ende eine Bohrung (22b') aufweist, die sich durch die ganze Breite des Armes erstreckt, wobei in diese Bohrung (22b') ein Stift (23) eingesetzt ist, der nach weiterem Hindurchziehen des Armes (22b) durch den Schlitz im geneigten Schenkel des kurzen Profilstücks (20) als Anschlag dient für den Fall, dass zum Anbringen des Aussenrückblickspiegels an das Fahrzeug der Abstand zwischen dem Bügel (21) und dem kurzen Profilstück (20) verkürzt werden soll.

FIG.1

FIG. 2

FIG.3

0017125

EUROPÄISCHER RECHERCHENBERICHT

Europäisches Patentamt

Nummer der Anmeldung

EP 80 10 1543.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 495 799 (W.J. MURGAS)<br>* Fig. 1 bis 3 *<br>-- | 1-3 |
| X | US - A - 3 395 883 (W.J. MURGAS)<br>* Fig. 1 *<br>---- | 1 |

KLASSIFIKATION DER ANMELDUNG (Int.Cl.3)

B 60 R    1/06

RECHERCHIERTE SACHGEBIETE (Int. Cl.3)

B 60 R    1/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 23-06-1980 | BECKER |

EPA form 1503.1   06.78